# EUROPÄISCHE PATENTSCHRIFT

(11) **EP 2 797 789 B1**
(45) Veröffentlichungstag und Bekanntmachung des Hinweises auf die Patenterteilung: **14.09.2016**
(21) Anmeldenummer: 12810228.2
(22) Anmeldetag: 19.12.2012
(51) Int. Cl.: B60T 8/34

(54) **HYDRAULISCH GESTEUERTES SPEICHERKAMMERVENTIL**
HYDRAULICALLY CONTROLLED STORAGE CHAMBER VALVE
SOUPAPE DE CHAMBRE D'ACCUMULATION À COMMANDE HYDRAULIQUE

(30) Priorität: 27.12.2011 DE 102011089956
(43) Veröffentlichungstag der Anmeldung: 05.11.2014
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2012/076062
(87) Internationale Veröffentlichungsnummer: WO 2013/098144

(56) Entgegenhaltungen:
- WO-A1-93/19960
- DE-A1-102009 028 912
- DE-A1-102011 087 816

## Beschreibung

### Stand der Technik

Die Erfindung geht aus von einem hydraulisch gesteuerten Speicherkammerventil nach der Gattung des unabhängigen Patentanspruchs 1.

Ein derartiges Speicherkammerventil ist beispielsweise bekannt aus der DE 102009028912 A1. Der darin beschriebene Stand der Technik kommt der Erfindung am Nächsten. Das bekannte Speicherkammerventil ist mit einem Stößel ausgestattet, der von einem von einer Druckfeder beaufschlagten Speicherkolben bewegbar ist. Der Stößel weist einen zapfenförmigen Fortsatz an einem, einem Schließglied des Speicherkammerventils zugewandten Ende auf. Mit dem Fortsatz durchgreift der Stößel eine Durchführung eines Ventilkörpers und betätigt das Schließglied. Der Stößel ist in Richtung seiner Längsachse im Inneren des Speicherkammerventils beweglich geführt. Diese Führung des Stößels ist aufwändig herzustellen, da von einem Fluchten des Stößel mit dem Schließglied eine dauerhaft zuverlässige Funktion des Speicherkammerventils abhängt.

Ein gattungsgemäßes Speicherkammerventil ist darüber hinaus auch aus der WO 93/19960 A1 bekannt.

Ferner ist aus der Patentschrift US 7,543,896 B2 beispielsweise ein hydraulisch gesteuertes Speicherkammerventil bekannt, bei welchem über einen Stößel im Speicherkolben ein federvorgespanntes Kugelsitzventil geöffnet wird. Dies erfolgt bei einem für das System spezifiziertem Kräfteverhältnis zwischen Federvorspannkraft und hydraulisch wirksamer Kraft. Die Betätigung des Kugelsitzventils erfolgt über einen zylindrischen metallischen Stößel, welcher in den Speicherkolben eingepresst ist. Der Speicherkolben nimmt auch einen Dichtring sowie einen Führungsring auf. Zwischen dem Speicherkolben und dem Verschlussdeckel, welcher über eine Halteverstemmung mit dem Pumpengehäuse verbunden ist, befindet sich eine entsprechend vorgespannte Druckfeder. Die Federkraft wirkt gegen die hydraulisch wirksame Kraft am Speicherkolben und bewirkt bei einem Überschuss der Federkraft ein Verschieben der Speicherkolben-Stößel-Kombination in öffnende Richtung des Speicherkammerventils. Dabei wird die Kugel durch den Stößel aus dem Sitz bewegt und das Speicherkammerventil geöffnet.

In der Offenlegungsschrift DE 42 02 388 A1 wird beispielsweise eine hydraulische Bremsanlage für ein Kraftfahrzeug beschrieben. Die beschriebene Bremsanlage umfasst ein hydraulisch gesteuertes Speicherkammerventil mit einem über eine erste Druckfeder vorgespannten Schließelement, welches einen Ventilsitz in einem Ventilkörper abdichtet, und einem Stößel, welcher mit einem von einer zweiten Druckfeder beaufschlagten Speicherkolben verbunden ist und das Schließelement aus dem Ventilsitz drückt, wenn zwischen den Federvorspannkräften und einer hydraulisch wirksamen Kraft ein spezifiziertes Kräfteverhältnis vorliegt. Bei diesen Konstruktionen von Speicherkammerventilen wird der Dichtkörper des federunterstützt geschlossenen Ventils durch einen mit dem Speicherkolben verbundenen Stift in Offenstellung bewegt, sobald das Speicherkammervolumen einen Schwellwert unterschreitet, d.h. der Speicherkolben sich dem Anschlag nähert.

### Offenbarung der Erfindung

Das erfindungsgemäße hydraulisch gesteuerte Speicherkammerventil mit den Merkmalen des unabhängigen Patentanspruchs 1 hat gegenüber dem der Erfindung am nächsten liegenden Stand der Technik den Vorteil, dass ein elastisches Halteelement mit Aufnahmemitteln am Ventilkörper befestigt ist, um den Stößel in der Durchführung zu führen. Der Stößel kann durch das federnde Halteelement in seiner Position in der Ventilkörperdurchführung so gehalten werden, dass bei Kontakt mit dem Speicherkolben die gewünschte Öffnungswirkung auf das Schließelement ausgeübt wird, ohne dass eine aufwändig herzustellende Axialführung des Stößels im Inneren des Speicherkammerventils notwendig ist. Die Öffnungswirkkraft auf das Schließelement kommt größtenteils von dem Speicherkolben bzw. der zweiten Druckfeder und nicht vom Halteelement. Das Halteelement kann beispielsweise aus Metall, Kunststoff, Elastomer usw. oder aus korrespondierenden Materialkombinationen gefertigt werden.

Vorteilhaft ist, dass die Herstellbarkeit der Einzelteile vereinfacht und die Herstellungskosten gesenkt werden können. Die vorliegende Erfindung ermöglicht die Verringerung der Genauigkeitsanforderungen bei der Fertigung, Montage und Konstruktion des Speicherkammerventils, so dass Aufwand und Herstellkosten weiter verringert und die Funktionsrobustheit erhöht werden können.

Erfindungsgemäß erfolgt die Befestigung des Stößels nicht am Speicherkolben, sondern am Ventilkörper

Ein Vorteil der Erfindung ist, dass ein Standardspeicherkolben verwendet werden kann, so dass Aufwand und Kosten für einen Sonderkolben mit angesetztem einteiligen und/oder mehrteiligem Stößel und/oder weiteren Sondermaßnahmen, wie beispielsweise Führungsringe, Führlänge, Dichtungen usw., für eine besonders präzise Linearbewegung des Speicherkolbens entfallen können, um den angesetzten Stößel sicher und robust über Toleranz- und Betriebslagen in die Ventilkörperbohrung einzuführen. Zudem ermöglichen Ausführungsformen der vorliegenden Erfindung auch eine außermittige Anordnung des Speicherkammerventils, da die Funktion, unabhängig davon wo der Speicherkolben mit seiner Stirnfläche auf den Stößel trifft, sichergestellt ist.

Durch die in den abhängigen Ansprüchen aufgeführten Maßnahmen und Weiterbildungen sind vorteilhafte Verbesserungen des im unabhängigen Patentanspruch 1 angegebenen hydraulisch gesteuerten Speicherkammerventils möglich.

Besonders vorteilhaft ist, dass der Ventilkörper mit dem Ventilsitz und dem Stößel mittig in einer eine Speicherkammer ausbildende Aufnahmebohrung angeordnet werden kann.

In vorteilhafter Ausgestaltung des erfindungsgemäßen hydraulisch gesteuerten Speicherkammerventils kann der Speicherkolben an seiner Stirnfläche Betätigungsmittel zur Betätigung des Stößels aufweisen. Das bedeutet, dass die Stirnfläche des Speicherkolbens nicht eben, sondern kugelabschnittsförmig oder andersartig sinnvoll gewölbt, eventuell auch ungleichmäßig, ungleichförmig, stufig usw. ausgeführt werden kann. Der Steuerkolben kann bei einer mittigen Anordnung des Ventilkörpers mit dem Ventilsitz und dem Stößel beispielsweise eine zentrale Wölbung als Betätigungsmittel zur Betätigung des Stößels aufweisen. Als Mittelpunkt des gewölbten Kugelabschnitts kann sinnvoller Weise ein Punkt gewählt werden, um den der Speicherkolben hauptsächlich dreht, wenn er von seiner theoretisch linearen Bewegung abweicht. Mit dem Kugelabschnitt wird erreicht, dass der Stößel immer unabhängig von der Art der nichtlinearen Bewegung des Kolbens geöffnet werden kann.

Das elastische Halteelement kann beispielsweise durch Schrauben, Verstemmen, Einclipsen am Ventilkörper befestigt werden.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Längsschnittdarstellung einer Ventilanordnung mit einem Ausführungsbeispiel eines erfindungsgemäßen Speicherkammerventils.
Fig. 2 zeigt eine schematische Detaildarstellung der Stirnfläche eines Steuerkolbens für das erfindungsgemäße Speicherkammerventil aus Fig. 1.

### Ausführungsformen der Erfindung

Aus dem Stand der Technik ist ein separater mit dem Speicherkolben fest verbundener Stößel bekannt, welcher gegen das Ventilschließelement drückt. Da zwischen dem Speicherkolben und dem Gehäuse prinzipbedingt ein gewisses Spiel erforderlich ist, muss das Auftreffen des Stößels auf das Schließelement durch hohe Anforderungen an die Bauteiltoleranzen sichergestellt werden. Da der Hebelarm des Stößels in Bezug auf den Drehpunkt des Steuerkolbens relativ groß ist und ein Drehen des Steuerkolbens um seine Hochachse (Hubrichtung) möglich ist, sind der Stößel und das Speicherkammerventil mittig im ...

Steuerkolben bzw. in der Speicherkammerbohrung angeordnet. Da der Stößel mit dem Speicherkolben fest verbunden ist und durch die Ventilkörperöffnung tauchen muss, um den Dichtkörper in die Offenstellung zu bewegen, ist beim Speicherkolben und dem Stößel eine große Präzision in Teilegeometrie und Hubbewegung erforderlich. Diese Präzision der Teile wird üblicherweise durch hochgenaue, d.h. kostenintensive Teile, Fertigung und Montage erreicht. Die Präzision der Speicherkolbenhubbewegung wird durch eine aufwändigere Konstruktion, wie beispielsweise mit zusätzlichen Führungsringen, großer Führlänge usw. erzielt.

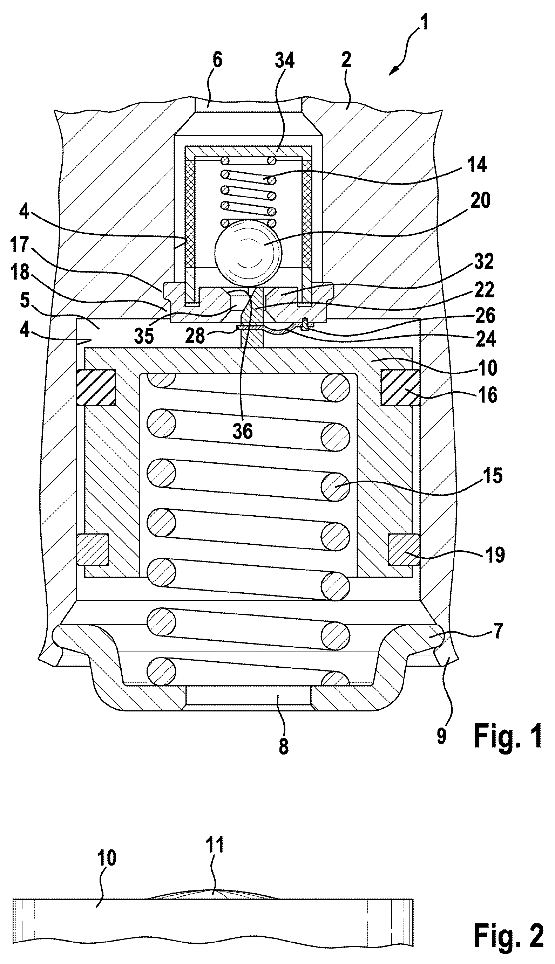

Fig. 1 zeigt eine Ventilanordnung mit einem erfindungsgemäßen hydraulisch gesteuerten Speicherkammerventil 1, welches in einer gestuften Aufnahmebohrung 4 eines Fluidblocks 2 bzw. Pumpengehäuses angeordnet ist. Ausführungsformen des erfindungsgemäßen hydraulisch gesteuerten Speicherkammerventils 1 können beispielsweise in einem hydraulischen Bremssystem in einem Fahrzeug eingesetzt werden.

Wie aus Fig. 1 und 2 ersichtlich ist, umfasst das dargestellte Ausführungsbeispiel des hydraulisch gesteuerten Speicherkammerventils 1 ein über eine erste Druckfeder 14 vorgespanntes Schließelement 20 und einen Stößel 22. Hierbei dichtet das Schließelement 20 einen Ventilsitz 36 in einem Ventilkörper 32 ab. Der Stößel 22 durchgreift eine Durchführung 35 im Ventilkörper 32, an deren Rand der Ventilsitz 36 ausgebildet ist, und wird von einem von einer zweiten Druckfeder 15 beaufschlagten Speicherkolben 10 bewegt, um das Schließelement 20 aus dem Ventilsitz 36 zu drücken, wenn zwischen den Federvorspannkräften und einer hydraulisch wirksamen Kraft ein spezifiziertes Kräfteverhältnis vorliegt. In den dargestellten Ausführungsbeispielen ist dies der Fall, wenn die auf den Speicherkolben 10 wirkende Federkraft der zweiten Druckfeder 15 größer als die auf den Speicherkolben 10 wirkende Hydraulikkraft und die auf das Schließelement 20 wirkende Vorspannkraft der ersten Druckfeder 14 ist. Ist die auf den Speicherkolben 10 wirkende Federkraft der zweiten Druckfeder 15 kleiner als die auf den Speicherkolben 10 wirkende Hydraulikkraft und die auf das Schließelement 20 wirkende Vorspannkraft der ersten Druckfeder 14, dann wird das Schließelement 20 in den Ventilsitz 36 gedrückt. Die erste Druckfeder 14 und das Schließelement 20 sind in einem Filter 34 geführt, welcher zusätzlich Schwebstoffe aus dem geförderten Medium filtert.

Erfindungsgemäß ist der Stößel 22 im Bereich der Durchführung 35 längsbeweglich befestigt und liegt während der Bewegung an einer Stirnfläche des Speicherkolbens 10 an. Dies ermöglicht in vorteilhafter Weise die Verringerung der Genauigkeitsanforderungen an die Fertigung, Montage und Konstruktion des hydraulisch gesteuerten Speicherkammerventils 1, so dass Aufwand und Herstellkosten verringert und die Funktionsrobustheit erhöht werden können.

Wie aus Fig. 1 und 2 weiter ersichtlich ist, ist der Ventilkörper 32 mit dem Ventilsitz 36 und dem Stößel 22 bei dem dargestellten Ausführungsbeispiel des erfindungsgemäßen hydraulisch gesteuerten Speicherkammerventils 1 mittig an einer eine Speicherkammer 5 ausbildende Aufnahmebohrung 4 angeordnet. Der Kern des Ausführungsbeispiels ist jedoch die bewegliche Befestigung des Stößels 22 nicht am Speicherkolben 10, sondern am Ventilkörper 32 und die Betätigung des Stößels 22 durch Druckkontakt des heranfahrenden Speicherkolbens 10.

Der Stößel 22 ist im dargestellten Ausführungsbeispiel durch ein elastisches Halteelement 24 mit Aufnahmemitteln 28, das beispielsweise als federndes Halteblech mit einer Aufnahmebohrung ausgeführt ist, in seiner Position in der Durchführung 35 des Ventilkörpers 32 so gehalten, dass bei Kontakt mit dem Speicherkolben 10 die gewünschte Öffnungswirkung auf das als Kugel 20 ausgeführte Schließelement 20 ausgeübt wird. Die Öffnungswirkkraft kommt größtenteils von dem Speicherkolben 10 bzw. der zweiten Druckfeder 15 und nicht vom Halteelement 24. Der Stößel 22 kann mit seiner definierten Form beispielsweise definiert exzentrisch in der Durchführung 35 gehalten und geführt werden.

Das Halteelement 24 kann beispielsweise aus Metall, Kunststoff, Elastomer usw. oder einer beliebigen Materialkombinationen daraus gefertigt werden. Das Halteelement 24 für den Stößel 22 wird im dargestellten Ausführungsbeispiel über ein als Schraube ausgeführtes Befestigungselement 26 am Ventilkörper 32 angeschraubt. Alternativ sind auch andere Befestigungsarten wie beispielsweise Verstemmen, Einclipsen, eine einteilige Ausformung usw. möglich. Die Benennung "Halteblech" soll keine Einschränkung der Bauform darstellen, sondern stellt eine erste günstige Ausführungsform dar, welche mit der Positionseinhaltung auch die federnde, nachgiebige Wirkung des Halteelments 24 ausdrückt. Zudem sind auch andere, beispielsweise mäanderförmige, radial zylinderförmige Bauformen für das Halteelement 24 vorstellbar.

Ein Vorteil des ersten Ausführungsbeispiels besteht darin, dass ein StandardSpeicherkolben 10 verwendet werden kann. Somit können Aufwand und Kosten für einen Sonderkolben entfallen.

Wie aus Fig. 2 weiter ersichtlich ist, weist der Speicherkolben 10 im dargestellten Ausführungsbeispiel keine ebene Stirnfläche, sondern eine kugelabschnittsförmige Wölbung 11 auf. Alternativ sind auch andere sinnvoll gewölbte, eventuell auch ungleichmäßige, ungleichförmige, stufige Erhöhungen der Stirnfläche des Speicherkolbens möglich. Mittelpunkt des Kugelabschnitts ist in vorteilhafter Weise ein Punkt, um den der Speicherkolben 10 hauptsächlich dreht, wenn er von seiner theoretisch linearen Bewegung abweicht. Mit dem Kugelabschnitt wird erreicht, dass der Stößel 22 immer unabhängig von der Art der nichtlinearen Bewegung des Speicherkolbens 10 geöffnet wird.

Wie aus Fig. 1 weiter ersichtlich ist, wird der Ventilkörper 32 bei dem dargestellten Ausführungsbeispiel des erfindungsgemäßen hydraulisch gesteuerten Speicherkammerventils 1 über einen Verstemmbereich 17 in den Fluidblock 2 bzw. in das Pumpengehäuse montiert und über eine erste Halteverstemmung 18 in seiner Lage fixiert. Im dargestellten Ausführungsbeispiel ist ein stufiger Verstemmbereich 17 am Ventilkörper 32 ausgebildet. Zur Herstellung der ersten Halteverstemmung 18 mit dem korrespondierenden Verstemmbereich 17 wird Material der Fluidbaugruppe 2 bzw. des Pumpengehäuses mit einem geeigneten Verstemmwerkzeug plastisch verformt, so dass sich ein vorzugsweise umlaufender Steg ausbildet, welcher den Verstemmbereich 17 zumindest teilweise überdeckt.

Die Betätigung des Speicherkammerventils 1 erfolgt durch die axiale Verschiebung des Speicherkolbens 10 und die Betätigung des Schließelements 20 über den Stößel 22. Der Speicherkolben 10 wird über einen Dichtring 16 sowie einen Führungsring 19 in der stufigen Aufnahmebohrung 4 im Fluidblock 2 bzw. Pumpengehäuse geführt. Zwischen dem Speicherkolben 10 und einem Verschlussdeckel 7, welcher über eine weitere Halteverstemmung 9 mit dem Fluidblock 2 bzw. Pumpengehäuse verbunden ist, ist die zweite vorgespannte Druckfeder 15 angeordnet. Zur Herstellung der weiteren Halteverstemmung 9 mit dem Verschlussdeckel 7 wird Material der Fluidbaugruppe 2 bzw. des Pumpengehäuses mit einem geeigneten Verstemmwerkzeug plastisch verformt, so dass sich ein vorzugsweise umlaufender Steg ausbildet, welcher den Rand des Verschlussdeckels 7 zumindest teilweise überdeckt. Zudem ist die Unterseite des Speicherkolbens 10 über eine Öffnung 8 im Verschlussdeckel 7 mit Atmosphärendruck verbunden. Zwischen der Oberseite des Speicherkolbens 10 und dem Ventilkörper 32 wird eine Speicherkammer 5 des Speicherkammerventils 1 ausgebildet. Das Speicherkammerventil 1 ist im drucklosen Zustand geöffnet. Dies erfolgt über eine Verschiebung des Speicherkolbens 10 in eine obere Endposition, hervorgerufen durch die vorgespannte zweite Druckfeder 15, welche auf die Unterseite des Speicherkolbens 10 wirkt.

Während des Betriebs des Hydrauliksystems, vorzugsweise des hydraulischen Bremssystems für ein Kraftfahrzeug, wirkt die Federkraft der zweiten Druckfeder 15 gegen die Federkraft der ersten Druckfeder 14 und die hydraulisch wirksame Kraft am Speicherkolben 10. Hierbei bewirkt ein Überschuss der Hydraulikkraft ein Verschieben des Schließelements 20 über den Stößel 22 in schließende Richtung des Speicherkammerventils 1. Dabei wird das Schließelement 20 durch die Federkraft der ersten Druckfeder 14 in den Ventilsitz 36 gedrückt. Ein Überschuss der Federkraft der zweiten Druckfeder 15 bewirkt ein Verschieben der Stößel-Schließelement-Kombination in öffnende Richtung des Speicherkammerventils 1. Dabei wird das Schließelement 20 vom Stößel 22 aus dem Ventilsitz 36 bewegt und das Speicherkammerventil 1 geöffnet. Im geöffneten Zustand kann das Fluid nahezu ungehindert von einem ersten Fluidanschluss 6, welcher beispielsweise mit einem Hauptbremszylinder verbunden ist, über den Filter 34 und den geöffneten Ventilsitz 36 zu einem nicht dargestellten Fluidanschluss fließen, welcher in die Speicherkammer 5 mündet und beispielsweise mit einer Rückförderpumpe verbunden ist.

Ausführungsformen der vorliegenden Erfindung stellen ein Speicherkammerventil zur Verfügung, dessen Einzelteile in vorteilhafter Weise vereinfacht hergestellt werden können, so dass die Herstellungskosten gesenkt werden können. Des Weiteren ermöglichen Ausführungsformen der vorliegenden Erfindung die Verringerung der Genauigkeitsanforderungen bei der Fertigung, Montage und Konstruktion des Speicherkammerventils, so dass Aufwand und Herstellkosten weiter verringert und die Funktionsrobustheit erhöht werden können.

## Patentansprüche

1. Hydraulisch gesteuertes Speicherkammerventil mit einem über eine erste Druckfeder (14) vorgespannten Schließelement (20), welches einen Ventilsitz (36) in einem Ventilkörper (32) abdichtet, und einem Stößel (22), welcher eine Durchführung (35) im Ventilkörper (32) durchgreift und von einem von einer zweiten Druckfeder (15) beaufschlagten Speicherkolben (10) bewegbar ist, um das Schließelement (20) zu betätigen, wenn zwischen den Federvorspannkräften und einer hydraulisch wirksamen Kraft ein spezifiziertes Kräfteverhältnis vorliegt, wobei der Stößel (22) im Bereich der Durchführung (35) längsbeweglich befestigt ist und der Stößel (22) während er sich bewegt an einer Stirnfläche des Speicherkolbens (10) anliegt **dadurch gekennzeichnet, dass** der Stößel (22) durch Aufnahmemittel (28) an einem, am Ventilkörper (32) befestigten elastischen Halteelement (24) angeordnet und in der Durchführung (35) des Ventilkörpers (32) geführt ist.

2. Speicherkammerventil nach Anspruch 1, **dadurch gekennzeichnet, dass** der Ventilkörper (32) mit dem Ventilsitz (36) und dem Stößel (22) mittig in einer eine Speicherkammer (5) ausbildende Aufnahmebohrung (4) angeordnet ist.

3. Speicherkammerventil nach Anspruch 1 oder 2, **dadurch gekennzeichnet, dass** der Speicherkolben (10) an seiner Stirnfläche Betätigungsmittel (11) zur Betätigung des Stößels (22) aufweist.

4. Speicherkammerventil nach Anspruch 2 und 3, **dadurch gekennzeichnet, dass** der Speicherkolben (10) eine zentrale Wölbung (11) zur Betätigung des Stößels (22) aufweist.

5. Speicherkammerventil nach Anspruch 1, **dadurch gekennzeichnet, dass** das elastische Halteelement (24) durch Schrauben, Verstemmen, Einclipsen am Ventilkörper (32) befestigt ist.

## Claims

1. Hydraulically controlled storage chamber valve, with a closing element (20) which is prestressed via a first compression spring (14) and seals off a valve seat (36) in a valve body (32), and with a tappet (22) which passes through a leadthrough (35) in the valve body (32) and can be moved by a storage piston (10) loaded by a second compression spring (15), in order to actuate the closing element (20) when a specified force ratio prevails between the spring prestressing forces and a hydraulically active force, wherein the tappet (22) is fastened longitudinally movably in the region of the leadthrough (35) and, whilst it moves, the tappet (22) bears against an end face of the storage piston (10), **characterized in that** the tappet (22) is arranged on an elastic holding element (24) fastened to the valve body (32), by means of reception means (28) and is guided in the leadthrough (35) of the valve body (32).

2. Storage chamber valve according to Claim 1, **characterized in that** the valve body (32), with the valve seat (36) and with the tappet (22), is arranged centrally in a reception bore (4) forming a storage chamber (5).

3. Storage chamber valve according to Claim 1 or 2, **characterized in that** the storage piston (10) has on its end face actuation means (11) for actuating the tappet (22).

4. Storage chamber valve according to Claims 2 and 3, **characterized in that** the storage piston (10) has a central curvature (11) for actuating the tappet (22).

5. Storage chamber valve according to Claim 1, **characterized in that** the elastic holding element (24) is fastened to the valve body (32) by screwing, calking or clipping.

## Revendications

1. Soupape de chambre d'accumulation à commande hydraulique comprenant un élément de fermeture (20) précontraint par le biais d'un premier ressort de compression (14), qui étanchéifie un siège de soupape (36) dans un corps de soupape (32), et une tige poussoir (22) qui vient en prise à travers un passage (35) dans le corps de soupape (32) et qui peut être déplacée par un piston d'accumulateur (10) sollicité par un deuxième ressort de compression (15) afin d'actionner l'élément de fermeture (20), lorsqu'entre les forces de précontrainte des ressorts et une force agissant hydrauliquement existe un rapport de forces spécifié, la tige poussoir (22) étant fixée de manière déplaçable longitudinalement dans la région du passage (35) et la tige poussoir (22), lors de son déplacement, s'appliquant contre une surface frontale du piston d'accumulateur (10), **caractérisée en ce que** la tige poussoir (22) est disposée par le biais de moyens de réception (28) sur un élément de retenue élastique (24) fixé au corps de soupape (32) et est guidée dans le passage (35) du corps de soupape (32).

2. Soupape de chambre d'accumulation selon la revendication 1, **caractérisée en ce que** le corps de soupape (32) est disposé avec le siège de soupape (36) et la tige poussoir (22) centralement dans un alésage de réception (4) constituant une chambre d'accumulation (5).

3. Soupape de chambre d'accumulation selon la revendication 1 ou 2, **caractérisée en ce que** le piston d'accumulateur (10) présente au niveau de sa surface frontale des moyens d'actionnement (11) pour actionner la tige poussoir (22).

4. Soupape de chambre d'accumulation selon les revendications 2 et 3, **caractérisée en ce que** le piston d'accumulateur (10) présente une courbure centrale (11) pour l'actionnement de la tige poussoir (22).

5. Soupape de chambre d'accumulation selon la revendication 1, **caractérisée en ce que** l'élément de retenue élastique (24) est fixé par des vis, par matage, ou par enclipsage sur le corps de soupape (32).
